# EUROPÄISCHE PATENTSCHRIFT

(11) **EP 3 042 435 B1**
(45) Veröffentlichungstag und Bekanntmachung des Hinweises auf die Patenterteilung: **01.07.2020**
(21) Anmeldenummer: 14799772.0
(22) Anmeldetag: 18.11.2014
(51) Int. Cl.: H02K 1/02, H02K 1/30, H02K 9/06

(54) **EINRICHTUNG MIT ELEKTRISCHER MASCHINE IN LEICHTBAUWEISE**
DEVICE WITH ELECTRIC MACHINE IN LIGHTWEIGHT CONSTRUCTION
DISPOSITIF AVEC MACHINE ÉLECTRIQUE EN CONSTRUCTION LÉGÈRE

(30) Priorität: 26.11.2013 EP 13194465
(43) Veröffentlichungstag der Anmeldung: 13.07.2016
(73) Patentinhaber: Rolls-Royce Deutschland Ltd & Co KG, 15827 Blankenfelde-Mahlow (DE)
(72) Erfinder: BALLAUF, Christian, 80638 München (DE)
(86) Internationale Anmeldenummer: PCT/EP2014/074896
(87) Internationale Veröffentlichungsnummer: WO 2015/078730

(56) Entgegenhaltungen:
- DE-A1- 19 846 220
- DE-A1-102010 021 025
- DE-A1-102011 089 417
- US-A1- 2012 043 844
- US-B1- 6 204 589
- US-B1- 6 492 756

## Beschreibung

Die vorliegende Erfindung betrifft eine Einrichtung,
- wobei die Einrichtung einen Tragkörper aufweist,
- wobei ein Aktivteil einer elektrischen Maschine über eine Verbindungsstruktur mit dem Tragkörper verbunden ist und relativ zum Tragkörper fixiert ist,
- wobei die elektrische Maschine einen Rotor aufweist, der mit einem Statorpaket elektromagnetisch zusammenwirkt und relativ zum Statorpaket drehbar gelagert ist, so dass der Rotor um eine Rotationsachse rotierbar ist.

Derartige Einrichtungen sind allgemein bekannt. Insbesondere ist nahezu jede übliche elektrische Maschine, die ein Gehäuse aufweist oder in eine größere Einrichtung eingebaut ist, derart aufgebaut.

Im Rahmen von mobilen Anwendungen spielt das Leistungsgewicht der elektrischen Maschine eine große Rolle. Insbesondere wird versucht, das Gewicht der elektrischen Maschine so weit wie möglich zu reduzieren. Gewichtseinsparungen werden sowohl bei den sogenannten Aktivteilen (d.h. den elektromagnetisch aktiven Komponenten, also Magneten und Wicklungen sowie Blechen bzw. Blechpaket, oft kurz auch als Rotor und Statorpaket bezeichnet) als auch bei den übrigen Komponenten, den sogenannten Passivteilen, angestrebt.

Wenn die unmittelbare Lagerung der Aktivteile nicht möglich ist, muss das zwischen den Aktivteilen wirkende Drehmoment von einer entsprechenden Verbindungsstruktur aufgenommen werden. Von dem Rotor muss das Drehmoment - gegebenenfalls über die Verbindungsstruktur - auf eine anzutreibende Rotorwelle übertragen werden. Vom Statorpaket muss das Drehmoment - gegebenenfalls über die Verbindungsstruktur - auf einen Grundkörper der Einrichtung übertragen werden.

Im Stand der Technik ist bekannt, die Verbindungsstruktur als Scheibe oder als Speichenstruktur auszubilden. In diesem Fall überträgt die Verbindungsstruktur das Drehmoment innerhalb einer orthogonal zur Rotationsachse verlaufenden Radialebene. In der Verbindungsstruktur kommt es zu erheblichen Scher- und Biegebeanspruchungen. Die Verbindungsstruktur muss daher sehr stabil und damit schwer konstruiert werden.

Im Stand der Technik ist bekannt, die Verbindungsstruktur als Scheibe oder als Speichenstruktur auszubilden. In diesem Fall überträgt die Verbindungsstruktur das Drehmoment innerhalb einer orthogonal zur Rotationsachse verlaufenden Radialebene. In der Verbindungsstruktur kommt es zu erheblichen Scher- und Biegebeanspruchungen. Die Verbindungsstruktur muss daher sehr stabil und damit schwer konstruiert werden.

Die Aufgabe der vorliegenden Erfindung besteht darin, eine Einrichtung mit einer elektrischen Maschine in Leichtbauweise zu schaffen, die trotz eines hohen zu übertragenden Drehmoments mit einer einfachen, leichten Verbindungsstruktur auskommt.

Die Aufgabe wird durch eine Einrichtung mit den Merkmalen des Anspruchs 1 gelöst. Vorteilhafte Ausgestaltungen der Einrichtung sind Gegenstand der abhängigen Ansprüche 2 bis 17.

Die Offenlegungsschrift US 2012/043844 A1 offenbart einen ummantelten Rotor für einen Elektromotor vom Außenrotortyp, der zum Betrieb einer Direktantriebs-Waschmaschine verwendet wird. Der Rotor weist Magnete auf, die durch einen Polymerrahmen umspritzt und durch Magnetabstandshalter des Polymerrahmens voneinander beabstandet sind.

Die Offenlegungsschrift DE 10 2011 089417 A1 offenbart ein Aktivteil, das eine Anordnung von Schichten aufweist, wobei die Anordnung eine erste magnetisch aktive Schicht und eine durch Fasern verstärkte Schicht aufweist, die an der ersten magnetisch aktiven Schicht angeordnet ist, wobei die erste magnetisch aktive Schicht Aussparungen aufweist, wobei die erste magnetisch aktive Schicht zwischen einer ersten Aussparung und einer zweiten Aussparung einen ersten Verbindungsbereich aufweist, um den eine durch die verstärkte Schicht verlaufende Verbindungsfaser so angeordnet ist, dass die Verbindungsfaser von einer ersten Seite der ersten magnetisch aktiven Schicht durch die erste Aussparung auf eine zweite Seite der ersten magnetisch aktiven Schicht und von der zweiten Seite der ersten magnetisch aktiven Schicht durch die zweite Aussparung auf die erste Seite der ersten magnetisch aktiven Schicht in die verstärkte Schicht geführt ist.
Die Aufgabe der vorliegenden Erfindung besteht darin, eine Einrichtung mit einer elektrischen Maschine in Leichtbauweise zu schaffen, die trotz eines hohen zu übertragenden Drehmoments mit einer einfachen, leichten Verbindungsstruktur auskommt.

Die Aufgabe wird durch eine Einrichtung mit den Merkmalen des Anspruchs 1 gelöst. Vorteilhafte Ausgestaltungen der Einrichtung sind Gegenstand der abhängigen Ansprüche 2 bis 17.

Erfindungsgemäß wird bei einer Einrichtung der eingangs genannten Art die Verbindungsstruktur derart ausgestaltet,
- dass die Verbindungsstruktur zumindest eine Nabe, einen Tragring, erste Streben und zweite Streben umfasst,
- dass die Nabe die Rotationsachse umgibt und sich in Richtung der Rotationsachse gesehen von einem oberen Nabenende zu einem unteren Nabenende erstreckt,
- dass die Nabe mit dem oberen Nabenende an den Tragkörper angrenzt und mit dem Tragkörper befestigt ist,
- dass der Tragring an seiner radial äußeren Außenseite an das Aktivteil angrenzt und mit dem Aktivteil verbunden ist,
- dass die ersten Streben sich, ausgehend von dem unteren Nabenende, in einer zur Rotationsachse orthogonalen Radialebene nach radial außen zum Tragring erstrecken,
- dass die ersten Streben in einem jeweiligen radial inneren ersten Übergangsbereich in die Nabe übergehen und in einem jeweiligen radial äußeren ersten Übergangsbereich in den Tragring übergehen,
- dass die zweiten Streben sich, ausgehend von dem oberen Nabenende, zum Tragring erstrecken und
- dass, bezogen auf die Radialebene, der radial innere erste Übergangsbereich und der radial äußere erste Übergangsbereich einer jeweiligen ersten Strebe mit der Rotationsachse jeweils einen ersten Winkel bilden.

Das Aktivteil kann alternativ der Rotor oder das Statorpaket sein. Unabhängig davon, welcher dieser beiden Fälle zutrifft, werden durch die erfindungsgemäße Ausgestaltung der Verbindungsstruktur durch das Drehmoment zwischen Rotor und Statorpaket in der Verbindungsstruktur im wesentlichen nur noch Zug- und Druckkräfte hervorgerufen. Scher- und Biegebeanspruchungen treten hingegen nur noch in geringem Umfang auf.

In Einzelfällen kann vorab bekannt sein, in welcher Richtung das Drehmoment zwischen Rotor und Statorpaket wirkt. In diesem Fall kann es - je nach Richtung des Drehmoments - von Vorteil sein, wenn die ersten Winkel um die Rotationsachse herum gesehen alle im Uhrzeigersinn oder alle gegen den Uhrzeigersinn verlaufen. Falls die Richtung des Drehmoments nicht vorab bekannt ist, ist es in der Regel von Vorteil, wenn die ersten Winkel um die Rotationsachse herum gesehen teilweise im Uhrzeigersinn und teilweise gegen den Uhrzeigersinn verlaufen.

Die ersten Streben können innerhalb der Radialebene gerade verlaufen. Vorzugsweise verlaufen die ersten Streben innerhalb der Radialebene jedoch gebogen. Dies führt in der Regel zu kleineren Spannungsbelastungen der ersten Streben. Im Gegensatz hierzu sind die zweiten Streben jedoch derart ausgebildet, dass bei einer in Richtung der Rotationsachse gerichteten Parallelprojektion der zweiten Streben deren Abbildungen innerhalb der Radialebene gerade verlaufen.

Eine besonders bevorzugte Ausgestaltung der vorliegenden Erfindung besteht darin,
- dass die zweiten Streben in einem jeweiligen radial inneren zweiten Übergangsbereich in die Nabe übergehen und in einem jeweiligen radial äußeren zweiten Übergangsbereich in den Tragring übergehen,
- dass, bezogen auf die Rotationsachse, der radial innere zweite Übergangsbereich und der radial äußere zweite Übergangsbereich einer jeweiligen zweiten Strebe miteinander jeweils einen zweiten Winkel bilden,
- dass um die Rotationsachse herum gesehen im Bereich je einer der ersten Streben auch je eine der zweiten Streben angeordnet ist und
- dass der jeweilige zweite Winkel der im Bereich der jeweiligen ersten Strebe angeordneten zweiten Strebe gegenläufig zum jeweiligen ersten Winkel der jeweiligen ersten Strebe ist.

Durch diese Ausgestaltung werden Kräfte, die tendenziell eine Verwindung des Tragrings bewirken, möglichst klein gehalten.

Vorzugsweise weisen die zweiten Streben um die Rotationsachse herum gesehen eine zweite Strebenbreite und in Richtung der Rotationsachse gesehen eine Strebenhöhe auf, wobei die Strebenhöhe größer als die zweite Strebenbreite ist. Diese Ausgestaltung führt zu einer erhöhten Stabilität der zweiten Streben gegenüber einer in Richtung der Rotationsachse wirkenden Biegekraft.

Vorzugsweise umfasst die Verbindungsstruktur zusätzlich dritte Streben. Falls die dritten Streben vorhanden sind, erstrecken die dritten Streben sich, ausgehend von dem unteren Nabenende, in der Radialebene nach radial außen zum Tragring und verlaufen rein radial. Diese Ausgestaltung hat - bei gleicher Gesamtzahl an in der Radialebene verlaufenden Streben - in Versuchen eine höhere Stabilität bewirkt, als wenn alle in der Radialebene verlaufenden Streben als erste Streben ausgebildet sind.

In Versuchen hat sich weiterhin eine optimale Stabilität dadurch ergeben, dass um die Rotationsachse herum gesehen in der Radialebene zwischen je zwei der ersten Streben jeweils entweder keine dritten Streben oder mindestens zwei der dritten Streben angeordnet sind.

Die ersten Streben weisen in der Radialebene gesehen eine erste Strebenbreite auf, die dritten Streben eine dritte Strebenbreite. Die dritten Streben müssen jedoch nur geringere Belastungen aufnehmen und übertragen als die ersten Streben. Vorzugsweise ist die dritte Strebenbreite daher kleiner als die erste Strebenbreite. Dies führt - bei unveränderter Belastbarkeit der Verbindungsstruktur - zu einer Minimierung des Gewichts der Verbindungsstruktur.

Vorzugsweise umfasst die Verbindungsstruktur zusätzlich vierte Streben. Falls die vierten Streben vorhanden sind, erstrecken die vierten Streben sich, ausgehend von dem oberen Nabenende, zum Tragring. Die vierten Streben sind in diesem Fall vorzugsweise derart angeordnet, dass die vierten Streben bei einer in Richtung der Rotationsachse gerichteten Parallelprojektion der vierten Streben in die Radialebene auf die dritten Streben projiziert werden.

Bei der erfindungsgemäßen Ausgestaltung der Verbindungsstruktur wird ein wesentlicher Teil des Drehmoments zwischen Rotor und Aktivteil im Bereich des oberen Nabenende in die Nabe eingeleitet. Es ist daher zum Zwecke einer noch weitergehenden Reduzierung des Gewichts der Verbindungsstruktur möglich, dass die Nabe orthogonal zur Rotationsachse gesehen am oberen Nabenende eine größere Wandstärke aufweist als am unteren Nabenende. Die Wandstärke der Nabe am unteren Nabenende kann unter Umständen 10 % und weniger der Wandstärke der Nabe am oberen Nabenende betragen.

Vorzugsweise weist der Tragring an seiner radial äußeren Außenseite eine Verzahnung auf. Dadurch wird bei entsprechender Ausgestaltung des Aktivteils ein Formschluss zwischen dem Aktivteil und dem Tragring bewirkt, so dass die Übertragung des Drehmoments vom Aktivteil auf den Tragring besonders zuverlässig ist.

Die Verbindungsstruktur besteht vorzugsweise aus Aluminium. Dies führt bei relativ kleinem Gewicht zu einer relativ hohen Stabilität.

Vorzugsweise ist die Verbindungsstruktur einstückig ausgebildet. Beispielsweise kann die Verbindungsstruktur als Gussteil ausgebildet sein. Alternativ kann zwischen einzelnen Elementen die Einstückigkeit durch Stoffschluss (Verschweißen oder Löten) hergestellt sein.

Es ist möglich, dass die elektrische Maschine als Innenläufer ausgebildet ist. In diesem Fall ist das Aktivteil als Rotor der elektrischen Maschine ausgebildet. Der Tragkörper ist in diesem Fall als Rotorwelle der elektrischen Maschine ausgebildet.

Alternativ ist es möglich, dass die elektrische Maschine als Außenläufer ausgebildet ist. In diesem Fall ist das Aktivteil als Aktivteil der elektrischen Maschine ausgebildet. Der Tragkörper ist in diesem Fall als Grundkörper der elektrischen Maschine ausgebildet.

Die erfindungsgemäße Einrichtung kann im übrigen nach Bedarf ausgebildet sein. Insbesondere im Falle eines Außenläufers ist jedoch eine Anwendung im Bereich der Luftfahrt bevorzugt. In diesem Fall ist die Einrichtung ein Luftfahrzeug, insbesondere ein Hubschrauber.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Einrichtung mit einer elektrischen Maschine,
- FIG 2 und 3: je einen Längsschnitt durch eine elektrische Maschine,
- FIG 4: eine perspektivische Darstellung einer Verbindungsstruktur,
- FIG 5: eine Teilansicht eines Schnittes durch die Verbindungsstruktur von FIG 4 und
- FIG 6: einen Teil einer Draufsicht auf die Verbindungsstruktur von FIG 4.

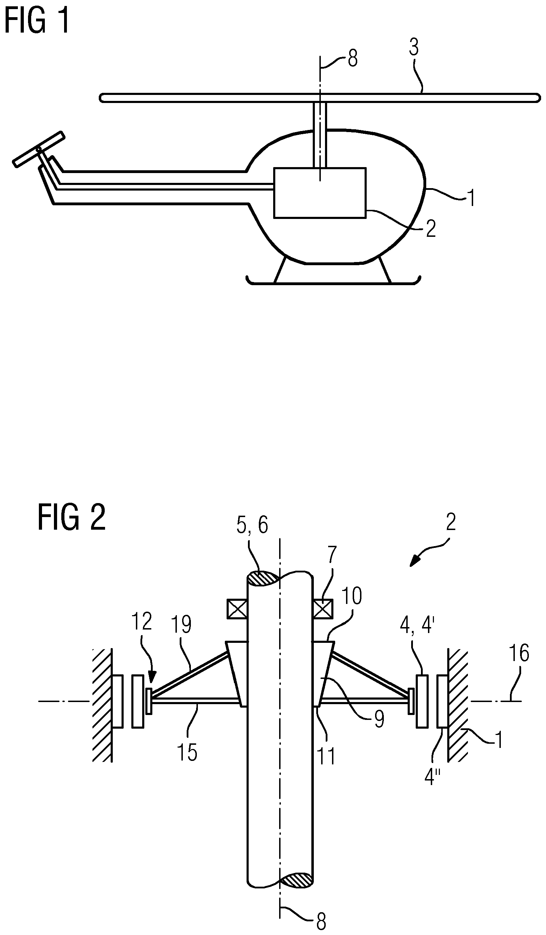

Gemäß FIG 1 weist eine - prinzipiell beliebige - Einrichtung einen Grundkörper 1 auf. Gemäß FIG 1 ist die Einrichtung ein Luftfahrzeug, nämlich ein Hubschrauber. Der Grundkörper 1 kann beispielsweise der Rumpf des Luftfahrzeugs sein. Die Darstellung von FIG 1 ist jedoch rein beispielhaft. Prinzipiell könnte der Grundkörper 1 eine beliebige Gestalt aufweisen.

Im Grundkörper 1 ist eine elektrische Maschine 2 angeordnet. Die elektrische Maschine 2 treibt ein Aggregat 3 der Einrichtung an. Insbesondere kann die elektrische Maschine 2 als Hauptantrieb der Einrichtung ausgebildet sein.

Gemäß FIG 2 ist die elektrische Maschine 2 als Innenläufer ausgebildet. In diesem Fall ist ein erstes Aktivteil 4 der elektrischen Maschine 2 als deren Rotor 4' ausgebildet. Ein zweites Aktivteil der elektrischen Maschine 2 ist in diesem Fall als deren Statorpaket 4" ausgebildet. Ein Tragkörper 5 der Einrichtung ist als Rotorwelle 6 der elektrischen Maschine 2 ausgebildet.

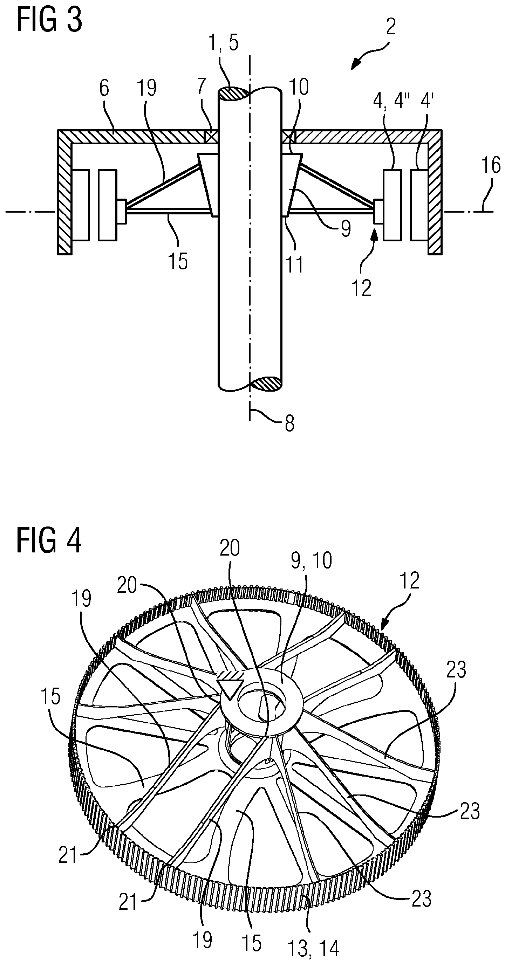

Gemäß FIG 3 ist die elektrische Maschine 2 als Außenläufer ausgebildet. In diesem Fall ist das erste Aktivteil 4 der elektrischen Maschine 2 als deren Statorpaket 4" ausgebildet. Das zweite Aktivteil der elektrischen Maschine 2 ist in diesem Fall als deren Rotor 4' ausgebildet. Der Tragkörper 5 der Einrichtung ist in diesem Fall als Grundkörper 1 der elektrischen Maschine ausgebildet ist.

Der Rotor 4' wirkt mit dem Statorpaket 4" elektromagnetisch zusammen. Zwischen dem Statorpaket 4" und dem Rotor 4' bildet sich somit die elektromotorische Kraft aus. Der Rotor 4' ist in (mindestens) einem Lager 7 gelagert, so dass der Rotor 4' um eine Rotationsachse 8 rotierbar ist.

Soweit nachfolgend die Begriffe "axial", "radial" und "tangential" verwendet werden, sind sie stets auf die Rotationsachse 8 bezogen. Axial ist eine Richtung parallel zur Rotationsachse 8. Radial ist eine Richtung orthogonal zur Rotationsachse 8 auf die Rotationsachse 8 zu oder von ihr weg. Tangential ist eine Richtung orthogonal zur Rotationsachse 8 und orthogonal zur Radialrichtung. Tangential ist also eine Richtung, die in konstantem radialem Abstand und bei konstanter Axialposition kreisförmig um die Rotationsachse 8 herum gerichtet ist.

Insbesondere bei der Ausgestaltung gemäß FIG 3, prinzipiell jedoch auch bei der Ausgestaltung gemäß FIG 2, kann der Grundkörper 1 der Bestandteil des Luftfahrzeugs sein, insbesondere entsprechend der Darstellung in FIG 1 des Hubschraubers. In Falle eines Luftfahrzeugs ist das Aggregat 3 beispielsweise als Vor- und/oder Auftrieb generierende Luftschraube ausgebildet. Bei einem Hubschrauber wird die Luftschraube zwar üblicherweise als Rotor bezeichnet. Das Wort "Rotor" wird im vorliegenden Fall jedoch absichtlich vermieden, weil es bereits in Verbindung mit dem entsprechenden Aktivteil der elektrischen Maschine 2 verwendet wird.

Die nachfolgenden Ausführungen gelten sowohl für die Ausgestaltung gemäß FIG 2 als auch für die Ausgestaltung gemäß FIG 3. In Verbindung mit den weiteren FIG wird jedoch nur noch auf das erste Aktivteil 4 eingegangen.

Das erste Aktivteil 4 ist sowohl bei der Ausgestaltung gemäß FIG 2 als auch bei der Ausgestaltung gemäß FIG 3 über eine Verbindungsstruktur mit dem Tragkörper 5 verbunden und relativ zum Tragkörper 5 fixiert. Gemäß den FIG 4 bis 6 umfasst die Verbindungsstruktur eine Nabe 9. Die Nabe 9 umgibt die Rotationsachse 8. In Richtung der Rotationsachse 8 gesehen - also in Axialrichtung gesehen - erstreckt sich die Nabe von einem oberen Nabenende 10 zu einem unteren Nabenende 11. Mit dem oberen Nabenende 11 grenzt die Nabe 9 an den Tragkörper 5 an. Mit dem oberen Nabenende 11 ist die Nabe 9 mit dem Tragkörper 5 befestigt.

Gemäß den FIG 4 bis 6 umfasst die Verbindungsstruktur weiterhin einen Tragring 12. Der Tragring 12 grenzt an seiner radial äußeren Außenseite 13 an das erste Aktivteil 4 an. Er ist mit dem ersten Aktivteil 4 verbunden. Zum Bewirken einer besonders zuverlässigen Verbindung zwischen dem Tragring 12 und dem ersten Aktivteil 4 weist der Tragring 12 an seiner Außenseite 13 vorzugsweise eine Verzahnung 14 auf.

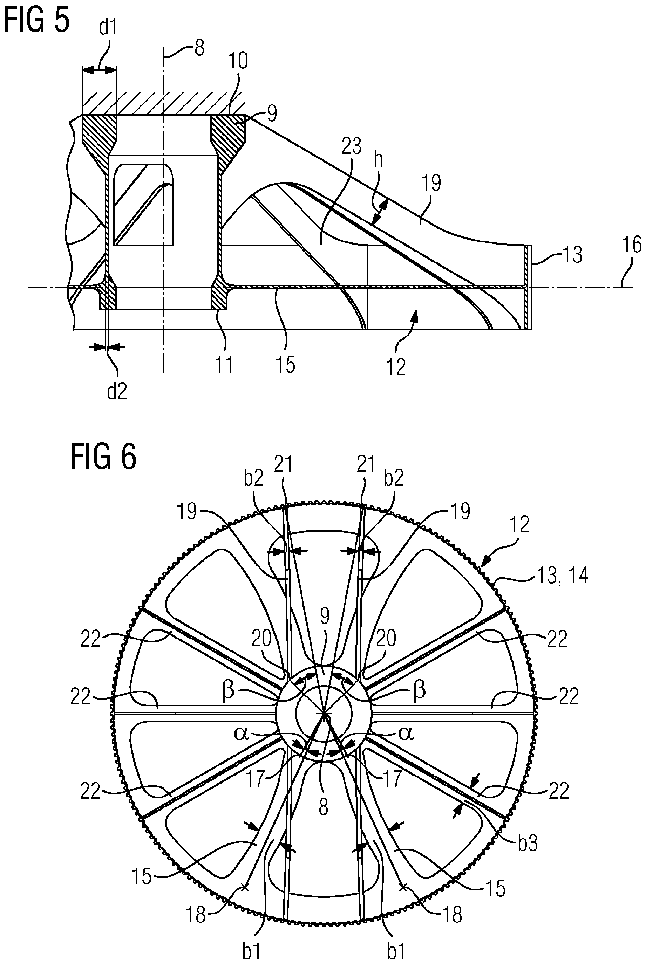

Gemäß den FIG 4 bis 6 umfasst die Verbindungsstruktur weiterhin erste Streben 15. Die ersten Streben 15 erstrecken sich in einer Radialebene 16, die orthogonal zur Rotationsachse 8 verläuft. In der Radialebene 16 erstrecken sich die ersten Streben 15, ausgehend vom unteren Nabenende 11, nach radial außen zum Tragring 12. Die ersten Streben 15 gehen in einem jeweiligen radial inneren ersten Übergangsbereich 17 in die Nabe 9 über. In einem jeweiligen radial äußeren ersten Übergangsbereich 18 gehen die ersten Streben 15 in den Tragring 12 über. Wie besonders deutlich aus FIG 6 ersichtlich ist, bilden - bezogen auf die Radialebene 16 und dort auf eine einzelne der ersten Streben 15 - der jeweilige radial innere erste Übergangsbereich 17 und der jeweilige radial äußere erste Übergangsbereich 18 mit der Rotationsachse 8 jeweils einen ersten Winkel α. Die ersten Winkel α sind in Tangentialrichtung gesehen jeweils vom radial inneren ersten Übergangsbereich 17 zum jeweiligen radial äußeren ersten Übergangsbereich 18 gerichtet. Die ersten Streben 15 weisen eine Strebenbreite b1 auf, nachfolgend als erste Strebenbreite b1 bezeichnet.

Gemäß den FIG 4 bis 6 umfasst die Verbindungsstruktur weiterhin zweite Streben 19. Auch die zweiten Streben 19 erstrecken sich zum Tragring 12. Im Gegensatz zu den ersten Streben 15 gehen sie jedoch nicht vom unteren Nabenende 11 aus, sondern vom oberen Nabenende 10.

Aus den FIG 4 bis 6 ist nicht nur die Grundausführungsform der vorliegenden Erfindung ersichtlich, sondern sind zugleich auch mehrere vorteilhafte Ausgestaltungen der vorliegenden Erfindung ersichtlich. Diese Ausgestaltungen sind unabhängig voneinander realisierbar und nach Bedarf beliebig miteinander kombinierbar, sofern sie nicht zwingend aufeinander aufbauen.

So zeigt insbesondere FIG 6 die bevorzugte Ausgestaltung, dass die ersten Winkel α teilweise im Uhrzeigersinn und teilweise gegen den Uhrzeigersinn verlaufen. Dies ist jedoch nicht zwingend. In Einzelfällen kann es sinnvoll sein, dass die ersten Winkel α um die Rotationsachse 8 herum gesehen alle im Uhrzeigersinn oder alle gegen den Uhrzeigersinn verlaufen.

Eine weitere bevorzugte Ausgestaltung besteht entsprechend der Darstellung in FIG 6 darin, dass die ersten Streben 15 innerhalb der Radialebene 16 gebogen verlaufen. Die zweiten Streben 19 sind hingegen vorzugsweise derart ausgebildet, dass bei einer axial gerichteten Parallelprojektion der zweiten Streben 19 deren Abbildungen innerhalb der Radialebene 16 gerade verlaufen.

Analog zu den ersten Streben 15 gehen die zweiten Streben 19 in einem jeweiligen radial inneren zweiten Übergangsbereich 20 in die Nabe 9 und in einem jeweiligen radial äußeren zweiten Übergangsbereich 21 in den Tragring 12 über. In einer weiteren bevorzugten Ausgestaltung bilden - analog zu den ersten Streben 15 - der radial innere zweite Übergangsbereich 20 und der radial äußere zweite Übergangsbereich 21 einer jeweiligen zweiten Strebe 19, bezogen auf die Rotationsachse 8, miteinander jeweils einen zweiten Winkel β. Die zweiten Winkel β sind in Tangentialrichtung gesehen jeweils vom radial inneren zweiten Übergangsbereich 20 zum jeweiligen radial äußeren zweiten Übergangsbereich 21 gerichtet.

Weiterhin ist um die Rotationsachse 8 herum gesehen im Bereich je einer der ersten Streben 15 auch je eine der zweiten Streben 19 angeordnet. Es besteht also vorzugsweise eine 1:1-Zuordnung je einer der zweiten Streben 19 zu je einer der ersten Streben 15. Der jeweilige zweite Winkel β der im Bereich der jeweiligen ersten Strebe 15 angeordneten zweiten Strebe 19 ist jedoch gegenläufig zum jeweiligen ersten Winkel α der jeweiligen ersten Strebe 15. Wenn also, bezogen auf eine einzelne der ersten Streben 15, der entsprechende erste Winkel α im (gegen den) Uhrzeigersinn verläuft, verläuft der zweite Winkel β der im Bereich dieser ersten Strebe 15 angeordneten zweiten Strebe 19 gegen den (im) Uhrzeigersinn.

Die zweiten Streben 19 weisen um die Rotationsachse 8 herum gesehen eine Strebenbreite b2 und in Richtung der Rotationsachse 8 gesehen eine Strebenhöhe h auf. Die Strebenbreite b2 der zweiten Streben 19 wird nachfolgend als zweite Strebenbreite b2 bezeichnet. Eine weitere bevorzugte Ausgestaltung besteht - siehe insbesondere FIG 4 - darin, dass die Strebenhöhe h größer als die zweite Strebenbreite b2 ist. Das Verhältnis zwischen Strebenhöhe h und zweiter Strebenbreite b2 kann beispielsweise zwischen 5:1 und 10:1 liegen.

Prinzipiell ist es möglich, dass in der Radialebene 16 ausschließlich die ersten Streben 15 verlaufen. In einer weiteren bevorzugten Ausgestaltung umfasst die Verbindungsstruktur jedoch zusätzlich dritte Streben 22. In diesem Fall erstrecken sich die dritten Streben 22, ausgehend von dem unteren Nabenende 11, ebenfalls in der Radialebene 16 nach radial außen zum Tragring 12. Im Gegensatz zu den ersten Streben 15 verlaufen die dritten Streben 22 jedoch rein radial. Dies ist aus FIG 4 und besonders deutlich aus FIG 6 ersichtlich. Aufbauend auf dem Vorhandensein der dritten Streben 22 sind weitere vorteilhafte Ausgestaltungen möglich.

So ist es beispielsweise möglich, dass - siehe FIG 4 und insbesondere FIG 6 - um die Rotationsachse 8 herum gesehen in der Radialebene 16 zwischen je zwei der ersten Streben 15 jeweils entweder keine dritten Streben 22 oder mindestens zwei der dritten Streben 22 angeordnet sind. Gemäß FIG 4 sind in der Radialebene 16 insgesamt zehn Streben 15, 22 angeordnet, nämlich zwei Gruppen von je zwei ersten Streben 15, deren erste Winkel α gegensinnig gerichtet sind, wobei zwischen diesen beiden Gruppen je drei dritte Streben 22 angeordnet sind.

Die dritten Streben 22 weisen - analog zu den ersten Streben 15 und den zweiten Streben 19 - eine Strebenbreite b3 auf, nachfolgend als dritte Strebenbreite b3 bezeichnet. Vorzugsweise ist entsprechend der Darstellung in FIG 6 die dritte Strebenbreite b3 kleiner als die erste Strebenbreite b1. Das Verhältnis der dritten Strebenbreite b3 zur ersten Strebenbreite b1 kann beispielsweise zwischen 30 % und 70 % der ersten Strebenbreite b1 liegen, insbesondere zwischen 40 % und 60 % der ersten Strebenbreite b1.

Falls die dritten Streben 22 vorhanden sind, kann die Verbindungsstruktur weiterhin zusätzlich vierte Streben 23 umfassen. In diesem Fall erstrecken sich die vierten Streben 23, ausgehend von dem oberen Nabenende 10, zum Tragring 12. Die vierten Streben 23 verlaufen jeweils in einer Axialebene. Insbesondere verlaufen die vierten Streben 23 jeweils oberhalb einer der dritten Streben 22. Die vierten Streben 23 sind also derart angeordnet, dass sie bei einer axial gerichteten Parallelprojektion in die Radialebene 16 auf die dritten Streben 22 projiziert werden.

Aufgrund der erfindungsgemäßen Konstruktion der Verbindungsstruktur werden die wirkenden Kräfte zu einem erheblichen Teil am oberen Nabenende 10 in die Nabe 9 eingeleitet. Über das untere Nabenende 11 findet hingegen nur in geringfügigen Umfang eine Einleitung von Kräften statt. Es ist daher entsprechend der Darstellung in FIG 5 möglich, dass die Nabe 9 orthogonal zur Rotationsachse 8 gesehen zwar am oberen Nabenende 10 in eine große Wandstärke d1 aufweist, am unteren Nabenende 11 hingegen nur eine kleine Wandstärke d2. Anders ausgedrückt: Am oberen Nabenende 10 weist die Nabe 9 orthogonal zur Rotationsachse 8 gesehen eine größere Wandstärke d1 auf als am unteren Nabenende 11.

Das Verhältnis der kleinen Wandstärke d2 zur großen Wandstärke d1 kann beispielsweise zwischen 5 % und 20 % der großen Wandstärke d1 liegen, insbesondere zwischen 8 % und 10 % der großen Wandstärke d1.

Das Material der Verbindungsstruktur kann nach Bedarf bestimmt sein. Es kann sich in Einzelfällen beispielsweise um faserverstärkte Kunststoffe handeln, insbesondere um glasfaserverstärkte Kunststoffe (GFK) oder kohlefaserverstärkte Kunststoffe (CFK). In der Regel besteht die Verbindungsstruktur jedoch aus Aluminium. In beiden Fällen kann die Verbindungsstruktur einstückig ausgebildet sein, im Falle von Aluminium insbesondere als Gussteil.

Die vorliegende Erfindung weist viele Vorteile auf. Insbesondere wird aufgrund der dreidimensionalen, gewölbeartigen Gestaltung der Verbindungsstruktur das elektromagnetische Drehmoment innerhalb der Verbindungsstruktur in einen Belastungszustand überführt, in dem nahezu ausschließlich Zug- und Druckkräfte auftreten. Dadurch wird die Übertragung des Drehmoments vom ersten Aktivteil 4 auf den Tragkörper 5 mittels einer sehr leichten Verbindungsstruktur möglich.

Zusammengefasst betrifft die vorliegende Erfindung also folgenden Sachverhalt:
Ein Aktivteil 4 einer elektrischen Maschine 2 ist über eine Verbindungsstruktur mit einem Tragkörper 5 verbunden und relativ zum Tragkörper 5 fixiert. Ein Rotor 4' der elektrischen Maschine wirkt mit einem Statorpaket 4" elektromagnetisch zusammen und ist relativ zum Statorpaket 4" drehbar gelagert, so dass der Rotor 4' um eine Rotationsachse 8 rotierbar ist. Die Verbindungsstruktur umfasst zumindest eine Nabe 9, einen Tragring 12 sowie erste und zweite Streben 15, 19. Die Nabe 9 umgibt die Rotationsachse 8 und erstreckt sich in Axialrichtung von einem oberen Nabenende 10 zu einem unteren Nabenende 11. Die Nabe 9 grenzt mit dem oberen Nabenende 10 an den Tragkörper 5 an und ist dort mit dem Tragkörper 5 befestigt. Der Tragring 12 grenzt an seiner Außenseite 13 an das Aktivteil 4 an und ist mit dem Aktivteil 4 verbunden. Die ersten Streben 15 erstrecken sich vom unteren Nabenende 11 in einer Radialebene 16 nach radial außen zum Tragring 12. Die ersten Streben 15 gehen in einem jeweiligen radial inneren Übergangsbereich 17 in die Nabe 9 und in einem jeweiligen radial äußeren Übergangsbereich 18 in den Tragring 12 über. Die zweiten Streben 19 erstrecken sich vom oberen Nabenende 10 zum Tragring 12. Bezogen auf die Radialebene 16, bilden der radial innere Übergangsbereich 17 und der radial äußere Übergangsbereich 18 einer jeweiligen ersten Strebe 15 mit der Rotationsachse 8 jeweils einen Winkel α.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden.

## Patentansprüche

1. Einrichtung,
- wobei die Einrichtung einen Tragkörper (5) aufweist,
- wobei ein Aktivteil (4) einer elektrischen Maschine (2) über eine Verbindungsstruktur mit dem Tragkörper (5) verbunden und relativ zum Tragkörper (5) fixiert ist,
- wobei die elektrische Maschine (2) einen Rotor (4') aufweist, der mit einem Statorpaket (4") elektromagnetisch zusammenwirkt und relativ zum Statorpaket (4") drehbar gelagert ist, so dass der Rotor (4') um eine Rotationsachse (8) rotierbar ist,
- wobei die Verbindungsstruktur zumindest eine Nabe (9), einen Tragring (12), erste Streben (15) und zweite Streben (19) umfasst,
- wobei die Nabe (9) die Rotationsachse (8) umgibt und sich in Richtung der Rotationsachse (8) gesehen von einem oberen Nabenende (10) zu einem unteren Nabenende (11) erstreckt,
- wobei die Nabe (9) mit dem oberen Nabenende (10) an den Tragkörper (5) angrenzt und mit dem Tragkörper (5) befestigt ist,
- wobei der Tragring (12) an seiner radial äußeren Außenseite (13) an das Aktivteil (4) angrenzt und mit dem Aktivteil (4) verbunden ist,
- wobei die ersten Streben (15) sich, ausgehend von dem unteren Nabenende (11), in einer zur Rotationsachse (8) orthogonalen Radialebene (16) nach radial außen zum Tragring (12) erstrecken,
- wobei die ersten Streben (15) in einem jeweiligen radial inneren ersten Übergangsbereich (17) in die Nabe (9) übergehen und in einem jeweiligen radial äußeren ersten Übergangsbereich (18) in den Tragring (12) übergehen,
- wobei die zweiten Streben (19) sich, ausgehend von dem oberen Nabenende (10), zum Tragring (12) erstrecken und
- wobei, bezogen auf die Radialebene (16), der radial innere erste Übergangsbereich (17) und der radial äußere erste Übergangsbereich (18) einer jeweiligen ersten Strebe (15) mit der Rotationsachse (8) jeweils einen ersten Winkel (α) bilden.

2. Einrichtung nach Anspruch 1, **dadurch gekennzeichnet, dass** die ersten Winkel (α) um die Rotationsachse (8) herum gesehen alle im Uhrzeigersinn oder alle gegen den Uhrzeigersinn oder teilweise im Uhrzeigersinn und teilweise gegen den Uhrzeigersinn verlaufen.

3. Einrichtung nach Anspruch 1 oder 2, **dadurch gekennzeichnet, dass** die ersten Streben (15) innerhalb der Radialebene (16) gebogen verlaufen.

4. Einrichtung nach Anspruch 1, 2 oder 3, **dadurch gekennzeichnet, dass** die zweiten Streben (19) derart ausgebildet sind, dass bei einer in Richtung der Rotationsachse (8) gerichteten Parallelprojektion der zweiten Streben (19) deren Abbildungen innerhalb der Radialebene (16) gerade verlaufen.

5. Einrichtung nach einem der obigen Ansprüche, **dadurch gekennzeichnet,**
- **dass** die zweiten Streben (19) in einem jeweiligen radial inneren zweiten Übergangsbereich (20) in die Nabe (9) übergehen und in einem jeweiligen radial äußeren zweiten Übergangsbereich (21) in den Tragring (12) übergehen,
- **dass**, bezogen auf die Rotationsachse (8), der radial innere zweite Übergangsbereich (20) und der radial äußere zweite Übergangsbereich (21) einer jeweiligen zweiten Strebe (19) miteinander jeweils einen zweiten Winkel (β) bilden,
- **dass** um die Rotationsachse (8) herum gesehen im Bereich je einer der ersten Streben (15) auch je eine der zweiten Streben (19) angeordnet ist und
- **dass** der jeweilige zweite Winkel (β) der im Bereich der jeweiligen ersten Strebe (15) angeordneten zweiten Strebe (19) gegenläufig zum jeweiligen ersten Winkel (α) der jeweiligen ersten Strebe (15) ist.

6. Einrichtung nach einem der obigen Ansprüche, **dadurch gekennzeichnet, dass** die zweiten Streben (19) um die Rotationsachse (8) herum gesehen eine zweite Strebenbreite (b2) und in Richtung der Rotationsachse (8) gesehen eine Strebenhöhe h aufweisen und dass die Strebenhöhe (h) größer als die zweite Strebenbreite (b2) ist.

7. Einrichtung nach einem der obigen Ansprüche, **dadurch gekennzeichnet, dass** die Verbindungsstruktur zusätzlich dritte Streben (22) umfasst, dass die dritten Streben (22) sich, ausgehend von dem unteren Nabenende (11), in der Radialebene (16) nach radial außen zum Tragring (12) erstrecken und dass die dritten Streben (22) rein radial verlaufen.

8. Einrichtung nach Anspruch 7, **dadurch gekennzeichnet, dass** um die Rotationsachse (8) herum gesehen in der Radialebene (16) zwischen je zwei der ersten Streben (15) jeweils entweder keine dritten Streben oder mindestens zwei der dritten Streben (22) angeordnet sind.

9. Einrichtung nach Anspruch 7 oder 8, **dadurch gekennzeichnet, dass** in der Radialebene (16) gesehen die ersten Streben (15) eine erste Strebenbreite (b1) und die dritten Streben (22) eine dritte Strebenbreite (b3) aufweisen und dass die dritte Strebenbreite (b3) kleiner als die erste Strebenbreite (b1) ist.

10. Einrichtung nach Anspruch 7, 8 oder 9, **dadurch gekennzeichnet, dass** die Verbindungsstruktur zusätzlich vierte Streben (23) umfasst, dass die vierten Streben (23) sich, ausgehend von dem oberen Nabenende (10), zum Tragring (12) erstrecken und dass die vierten Streben (23) derart angeordnet sind, dass die vierten Streben (23) bei einer in Richtung der Rotationsachse (8) gerichteten Parallelprojektion der vierten Streben (23) in die Radialebene (16) auf die dritten Streben (22) projiziert werden.

11. Einrichtung nach einem der obigen Ansprüche, **dadurch gekennzeichnet, dass** die Nabe (9) orthogonal zur Rotationsachse (8) gesehen am oberen Nabenende (10) eine größere Wandstärke (d1) aufweist als am unteren Nabenende (11).

12. Einrichtung nach einem der obigen Ansprüche, **dadurch gekennzeichnet, dass** der Tragring (12) an seiner radial äußeren Außenseite (13) eine Verzahnung (14) aufweist.

13. Einrichtung nach einem der obigen Ansprüche, **dadurch gekennzeichnet, dass** die Verbindungsstruktur aus Aluminium besteht.

14. Einrichtung nach einem der obigen Ansprüche, **dadurch gekennzeichnet, dass** die Verbindungsstruktur einstückig ausgebildet ist.

15. Einrichtung nach einem der obigen Ansprüche, **dadurch gekennzeichnet, dass** die elektrische Maschine (2) als Innenläufer ausgebildet ist, dass das Aktivteil (4) als Rotor (4') der elektrischen Maschine (2) ausgebildet ist und dass der Tragkörper (5) als Rotorwelle (6) der elektrischen Maschine (2) ausgebildet ist.

16. Einrichtung nach einem der obigen Ansprüche, **dadurch gekennzeichnet, dass** die elektrische Maschine (2) als Außenläufer ausgebildet ist, dass das Aktivteil (4) als Statorpaket (4") der elektrischen Maschine (2) ausgebildet ist und dass der Tragkörper (5) als Grundkörper (1) der elektrischen Maschine ausgebildet ist.

17. Einrichtung nach einem der obigen Ansprüche, **dadurch gekennzeichnet, dass** die Einrichtung ein Luftfahrzeug ist, insbesondere ein Hubschrauber.

## Claims

1. Device,
- wherein the device has a support body (5),
- wherein an active part (4) of an electric machine (2) is connected to the support body (5), and fixed relative to the support body (5), by way of a connecting structure,
- wherein the electric machine (2) has a rotor (4') which electromagnetically interacts with a stator pack (4") and is mounted so as to be rotatable relative to the stator pack (4"), such that the rotor (4') is rotatable about an axis of rotation (8),
- wherein the connecting structure comprises at least a hub (9), a support ring (12), first struts (15) and second struts (19),
- wherein the hub (9) surrounds the axis of rotation (8) and extends, as viewed in the direction of the axis of rotation (8), from an upper hub end (10) to a lower hub end (11),
- wherein the hub (9), by way of the upper hub end (10), adjoins the support body (5) and is fastened to the support body (5),
- wherein the support ring (12), at its radially external outer side (13), adjoins the active part (4) and is connected to the active part (4),
- wherein the first struts (15) extend from the lower hub end (11) radially outward to the support ring (12) in a radial plane (16) orthogonal to the axis of rotation (8),
- wherein the first struts (15) transition, in a respective radially inner first transition region (17), into the hub (9) and transition, in a respective radially outer first transition region (18), into the support ring (12),
- wherein the second struts (19) extend from the upper hub end (10) to the support ring (12), and
- wherein, in relation to the radial plane (16), the radially inner first transition region (17) and the radially outer first transition region (18) of a respective first strut (15) form
in each case a first angle (α) with the axis of rotation (8).

2. Device according to Claim 1, **characterized in that**, as viewed about the axis of rotation (8), the first angles (α) all run clockwise or all run counterclockwise or run, in part, clockwise and, in part, counterclockwise.

3. Device according to Claim 1 or 2, **characterized in that** the first struts (15) run in curved fashion within the radial plane (16).

4. Device according to Claim 1, 2 or 3, **characterized in that** the second struts (19) are designed such that, in a parallel projection of the second struts (19) in the direction of the axis of rotation (8), the images thereof within the radial plane (16) run in straight fashion.

5. Device according to one of the preceding claims, **characterized**
- **in that** the second struts (19) transition, in a respective radially inner second transition region (20), into the hub (9) and transition, in a respective radially outer second transition region (21), into the support ring (12),
- **in that**, in relation to the axis of rotation (8), the radially inner second transition region (20) and the radially outer second transition region (21) of a respective second strut (19) form in each case a second angle (β) with one another,
- **in that**, as viewed about the axis of rotation (8), in the region of in each case one of the first struts (15), there is also arranged in each case one of the second struts (19), and
- **in that** the respective second angle (β) of the second strut (19) arranged in the region of the respective first strut (15) is opposite to the respective first angle (α) of the respective first strut (15).

6. Device according to one of the preceding claims, **characterized in that** the second struts (19) have a second strut width (b2) as viewed about the axis of rotation (8) and have a strut height (h) as viewed in the direction of the axis of rotation (8), and **in that** the strut height (h) is greater than the second strut width (b2).

7. Device according to one of the preceding claims, **characterized in that** the connecting structure additionally comprises third struts (22), **in that** the third struts (22) extend in the radial plane (16) radially outward from the lower hub end (11) to the support ring (12), and **in that** the third struts (22) run purely radially.

8. Device according to Claim 7, **characterized in that**, as viewed about the axis of rotation (8), in each case either no third struts or at least two of the third struts (22) are arranged in the radial plane (16) between in each case two of the first struts (15) .

9. Device according to Claim 7 or 8, **characterized in that**, as viewed in the radial plane (16), the first struts (15) have a first strut width (b1) and the third struts (22) have a third strut width (b3), and **in that** the third strut width (b3) is smaller than the first strut width (b1).

10. Device according to Claim 7, 8 or 9, **characterized in that** the connecting structure additionally comprises fourth struts (23), **in that** the fourth struts (23) extend from the upper hub end (10) to the support ring (12), and **in that** the fourth struts (23) are arranged such that, in a parallel projection of the fourth struts (23) into the radial plane (16) in the direction of the axis of rotation (8), the fourth struts (23) are projected onto the third struts (22).

11. Device according to one of the preceding claims, **characterized in that** the hub (9), as viewed orthogonally with respect to the axis of rotation (8), has a greater wall thickness (d1) at the upper hub end (10) than at the lower hub end (11).

12. Device according to one of the preceding claims, **characterized in that** the support ring (12) has a toothing (14) on its radially external outer side (13) .

13. Device according to one of the preceding claims, **characterized in that** the connecting structure is composed of aluminum.

14. Device according to one of the preceding claims, **characterized in that** the connecting structure is of unipartite form.

15. Device according to one of the preceding claims, **characterized in that** the electric machine (2) is in the form of an internal-rotor machine, **in that** the active part (4) is in the form of a rotor (4') of the electric machine (2), and **in that** the support body (5) is in the form of a rotor shaft (6) of the electric machine (2).

16. Device according to one of the preceding claims, **characterized in that** the electric machine (2) is in the form of an external-rotor machine, **in that** the active part (4) is in the form of a stator pack (4") of the electric machine (2), and **in that** the support body (5) is in the form of a main body (1) of the electric machine.

17. Device according to one of the preceding claims, **characterized in that** the device is an aircraft, in particular a helicopter.

## Revendications

1. Dispositif présentant un corps de support (5), dispositif dans lequel
- une partie active (4) d'une machine électrique (2) est reliée par le biais d'une structure de liaison au corps de support (5) et est fixée par rapport au corps de support (5),
- la machine électrique (2) présente un rotor (4') qui coopère de manière électromagnétique avec un empilement de stator (4") et qui est supporté de manière rotative par rapport à l'empilement de stator (4") de telle sorte que le rotor (4') puisse tourner autour d'un axe de rotation (8),
- la structure de liaison comprend au moins un moyeu (9), une bague de support (12), des premières entretoises (15) et des deuxièmes entretoises (19),
- le moyeu (9) entoure l'axe de rotation (8) et, vu dans la direction de l'axe de rotation (8), s'étend depuis une extrémité de moyeu supérieure (10) jusqu'à une extrémité de moyeu inférieure (11),
- le moyeu (9), par l'extrémité de moyeu supérieure (10), est adjacent au corps de support (5) et est fixé au corps de support (5),
- la bague de support (12), au niveau de son côté extérieur radialement extérieur (13), est adjacente à la partie active (4) et est reliée à la partie active (4),
- les premières entretoises (15) s'étendent, à partir de l'extrémité de moyeu inférieure (11), dans un plan radial (16) perpendiculaire à l'axe de rotation (8) radialement vers l'extérieur jusqu'à la bague de support (12),
- les premières entretoises (15), dans une première région de transition radialement intérieure respective (17), se prolongent dans le moyeu (9), et dans une première région de transition radialement extérieure respective (18), se prolongent dans la bague de support (12),
- les deuxièmes entretoises (19), à partir de l'extrémité de moyeu supérieure (10), s'étendent jusqu'à la bague de support (12) et
- par rapport au plan radial (16), la première région de transition radialement intérieure (17) et la première région de transition radialement extérieure (18) d'une première entretoise respective (15) forment avec l'axe de rotation (8) à chaque fois un premier angle (α).

2. Dispositif selon la revendication 1, **caractérisé en ce que** les premiers angles (α), vu autour de l'axe de rotation (8), s'étendent tous dans le sens des aiguilles d'une montre ou s'étendent tous dans le sens inverse des aiguilles d'une montre ou s'étendent partiellement dans le sens des aiguilles d'une montre et partiellement dans le sens inverse des aiguilles d'une montre.

3. Dispositif selon la revendication 1 ou 2, **caractérisé en ce que** les premières entretoises (15) s'étendent sous forme courbe à l'intérieur du plan radial (16).

4. Dispositif selon la revendication 1, 2 ou 3, **caractérisé en ce que** les deuxièmes entretoises (19) sont réalisées de telle sorte que dans le cas d'une projection parallèle, orientée dans la direction de l'axe de rotation (8), des deuxièmes entretoises (19), leurs images s'étendent en ligne droite dans le plan radial (16).

5. Dispositif selon l'une quelconque des revendications précédentes, **caractérisé en ce que**
- les deuxièmes entretoises (19), dans une deuxième région de transition radialement intérieure respective (20), se prolongent dans le moyeu (9), et dans une deuxième région de transition radialement extérieure respective (21), se prolongent dans la bague de support (12),
- par rapport à l'axe de rotation (8), la deuxième région de transition radialement intérieure (20) et la deuxième région de transition radialement extérieure (21) d'une deuxième entretoise respective (19) forment l'une avec l'autre à chaque fois un deuxième angle (β),
- vu autour de l'axe de rotation (8), dans la région de chacune des premières entretoises (15), est également à chaque fois disposée l'une des deuxièmes entretoises (19) et
- le deuxième angle respectif (β) de la deuxième entretoise (19) disposée dans la région de la première entretoise respective (15) est en sens inverse du premier angle respectif (α) de la première entretoise respective (15).

6. Dispositif selon l'une quelconque des revendications précédentes, **caractérisé en ce que** les deuxièmes entretoises (19), vu autour de l'axe de rotation (8), présentent une deuxième largeur d'entretoise (b2) et vu dans la direction de l'axe de rotation (8), présentent une hauteur d'entretoise h et **en ce que** la hauteur d'entretoise (h) est supérieure à la deuxième largeur d'entretoise (b2).

7. Dispositif selon l'une quelconque des revendications précédentes, **caractérisé en ce que** la structure de liaison comprend en outre des troisièmes entretoises (22), **en ce que** les troisièmes entretoises (22) s'étendent, à partir de l'extrémité de moyeu inférieure (11), dans le plan radial (16) radialement vers l'extérieur vers la bague de support (12) et **en ce que** les troisièmes entretoises (22) s'étendent purement radialement.

8. Dispositif selon la revendication 7, **caractérisé en ce que**, vu autour de l'axe de rotation (8), dans le plan radial (16) entre à chaque fois deux des premières entretoises (15), sont à chaque fois disposées soit aucune troisième entretoise soit au moins deux des troisièmes entretoises (22).

9. Dispositif selon la revendication 7 ou 8, **caractérisé en ce que** vu dans le plan radial (16), les premières entretoises (15) présentent une première largeur d'entretoise (b1) et les troisièmes entretoises (22) présentent une troisième largeur d'entretoise (b3) et **en ce que** la troisième largeur d'entretoise (b3) est inférieure à la première largeur d'entretoise (b1).

10. Dispositif selon la revendication 7, 8 ou 9, **caractérisé en ce que** la structure de liaison comprend en outre des quatrièmes entretoises (23), **en ce que** les quatrièmes entretoises (23), à partir de l'extrémité de moyeu supérieure (10), s'étendent jusqu'à la bague de support (12) et **en ce que** les quatrièmes entretoises (23) sont disposées de telle sorte que les quatrièmes entretoises (23), dans le cas d'une projection parallèle, orientée dans la direction de l'axe de rotation (8), des quatrièmes entretoises (23), soient projetées dans le plan radial (16) sur les troisièmes entretoises (22).

11. Dispositif selon l'une quelconque des revendications précédentes, **caractérisé en ce que** le moyeu (9), vu perpendiculairement à l'axe de rotation (8), présente, au niveau de l'extrémité de moyeu supérieure (10), une plus grande épaisseur de paroi (d1) qu'au niveau de l'extrémité de moyeu inférieure (11).

12. Dispositif selon l'une quelconque des revendications précédentes, **caractérisé en ce que** la bague de support (12) présente une denture (14) au niveau de son côté extérieur radialement extérieur (13).

13. Dispositif selon l'une quelconque des revendications précédentes, **caractérisé en ce que** la structure de liaison se compose d'aluminium.

14. Dispositif selon l'une quelconque des revendications précédentes, **caractérisé en ce que** la structure de liaison est réalisée d'une seule pièce.

15. Dispositif selon l'une quelconque des revendications précédentes, **caractérisé en ce que** la machine électrique (2) est réalisée sous forme d'induit intérieur, **en ce que** la partie active (4) est réalisée sous forme de rotor (4') de la machine électrique (2) et **en ce que** le corps de support (5) est réalisé sous forme d'arbre de rotor (6) de la machine électrique (2).

16. Dispositif selon l'une quelconque des revendications précédentes, **caractérisé en ce que** la machine électrique (2) est réalisée sous forme d'induit extérieur, **en ce que** la partie active (4) est réalisée sous forme d'empilement de stator (4") de la machine électrique (2) et **en ce que** le corps de support (5) est réalisé sous forme de corps de base (1) de la machine électrique.

17. Dispositif selon l'une quelconque des revendications précédentes, **caractérisé en ce que** le dispositif est un aéronef, en particulier un hélicoptère.
